# EUROPEAN PATENT SPECIFICATION

(11) **EP 2 324 994 B1**
(45) Date of publication and mention of the grant of the patent: **07.01.2015**
(21) Application number: 10190612.1
(22) Date of filing: 10.11.2010
(51) Int. Cl.: B29C 70/54, B29C 70/38, B29B 15/12, B29C 35/16

(54) **Fiber placement system and method with inline infusion and cooling**
Faserpositionierungssystem und Verfahren mit Inline-Infusion und -Kühlung
Système de positionnement de fibre et procédé avec perfusion en ligne et refroidissement

(30) Priority: 19.11.2009 US 621623
(43) Date of publication of application: 25.05.2011
(73) Proprietor: GENERAL ELECTRIC COMPANY, Schenectady, NY 12345 (US)
(72) Inventor: Klockow, Helge, Niskayuna, NY 12309 (US); Vermilyea, Mark Ernest, Niskayuna, NY 12309 (US); Wagner, David, Niskayuna, NY 12309 (US); Chen-Keat, Teresa Tian, Niskayuna, NY 12309 (US)
(74) Representative: Cleary, Fidelma

(56) References cited:
- EP-A1- 1 093 900
- DE-A1- 19 757 881
- US-A- 5 110 395
- US-A- 5 766 357
- US-A- 5 979 531
- US-A1- 2009 229 760

## Description

### BACKGROUND

The invention relates generally to fiber placement systems and methods for forming composite components and, more particularly, to fiber placement systems and methods with inline infusion and enhanced inline cooling.

Resin infused fiber composite materials are being used increasingly in a variety of diverse industries, such as automotive, aircraft, and wind energy, in part because of their high strength and stiffness to weight ratios. It would be desirable to form complex composite components and/or fiber patterns. However, current manufacturing processes for such parts typically involve the use of dry fiber pre-forms with subsequent resin infusion, or placement of preimpregnated fiber tows called "prepreg." Both of these methods have drawbacks: dry pre-forms can be very labor intensive to prepare, and prepreg tows are very expensive.

It would therefore be desirable to provide a fiber placement method and system that do not require the use of costly preimpregnated fiber tows or dry pre-forms. It would further be desirable for the fiber placement method and system to include enhanced inline cooling to facilitate the subsequent processing and use of inline resin infused fiber tows.

US 2009/0229760 A1 discloses a fiber application machine for the production of composite parts. As indicated in figure 5 of this document, it uses nozzles 60 to spray each fiber tow with resin.

DE 197 57 881 A1 discloses a method for impregnating fiber material by passing fibers over a porous body, with resin passing through the thickness of the body.

### BRIEF DESCRIPTION

One aspect of the present invention provides a fiber placement system as defined in claim 1.

Another aspect of the present invention provides a fiber placement method as defined in claim 6.

### DRAWINGS

There follows a detailed description of embodiments of the invention by way of example only with reference to the accompanying drawings, in which:
**FIG. 1** schematically depicts a fiber placement system embodiment of the invention;
**FIG. 2** is a side view of a fiber placement head for use in the system of FIG. 1;
**FIG. 3** is another side view of the fiber placement head shown in FIG. 2;
**FIG. 4** is a cross-sectional view of the fiber placement head of FIGS. 2 and 3;
**FIG. 5** shows a resin impregnation assembly with two infusion rollers for use in the system of FIG. 1;
**FIG. 6** schematically depicts an example array of nozzles for use in an example resin impregnation assembly which falls outside the scope of the claims;
**FIG. 7** illustrates an example infusion enhancer;
**FIG. 8** is a perspective view of an example cooler configuration for use in the fiber placement head of FIGS. 2-4;
**FIG. 9** schematically depicts an example cooling channel for the cooler of FIG. 8;
**FIG. 10** is a cross-sectional view of the cooler shown in FIG. 8;
**FIG. 11** illustrates an example cutter assembly for use in the fiber placement head of FIGS. 2-4;
**FIG. 12** is a cross-sectional view of the cutter assembly of FIG. 11; and
**FIG. 13** is a flow chart illustrating a fiber placement method embodiment of the invention.

### DETAILED DESCRIPTION

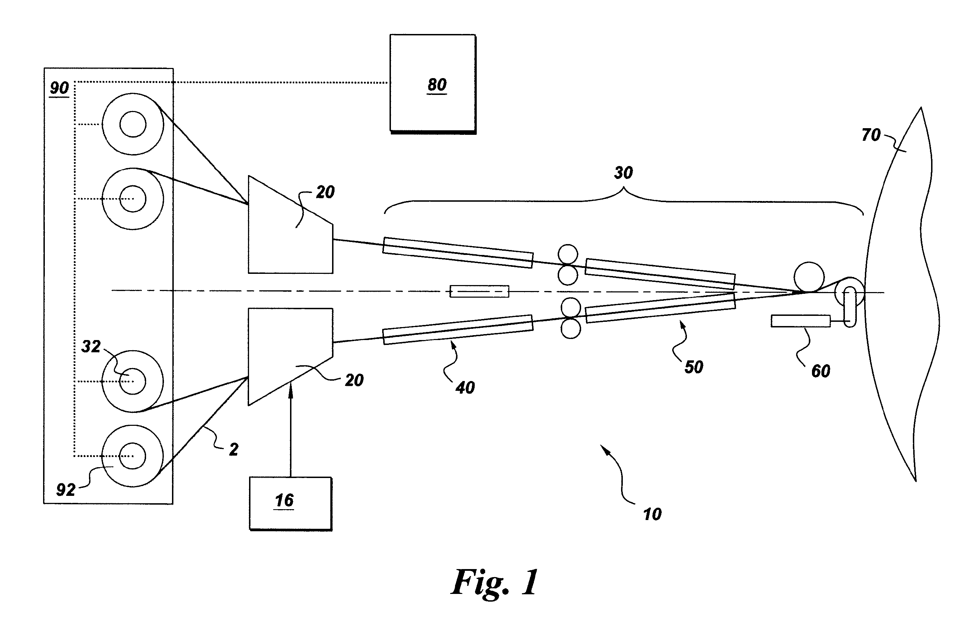

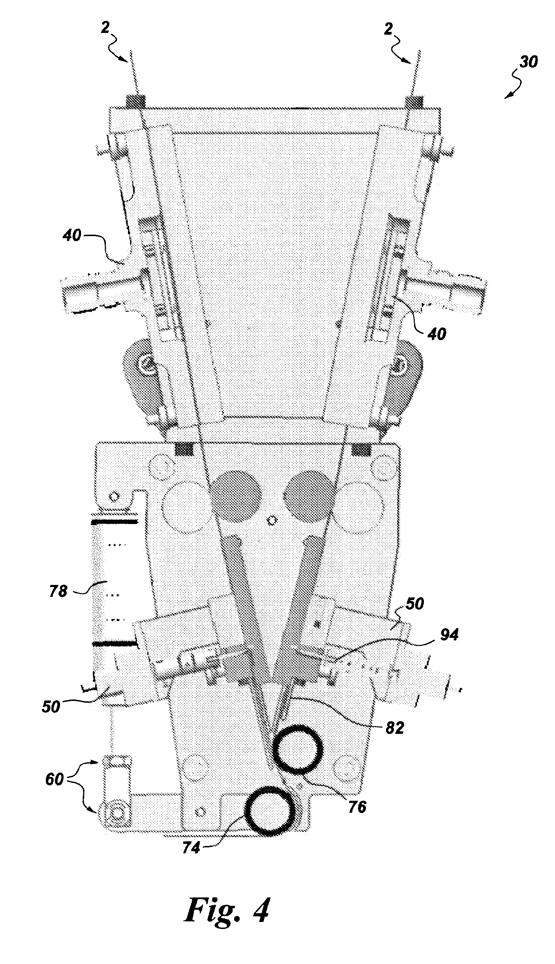

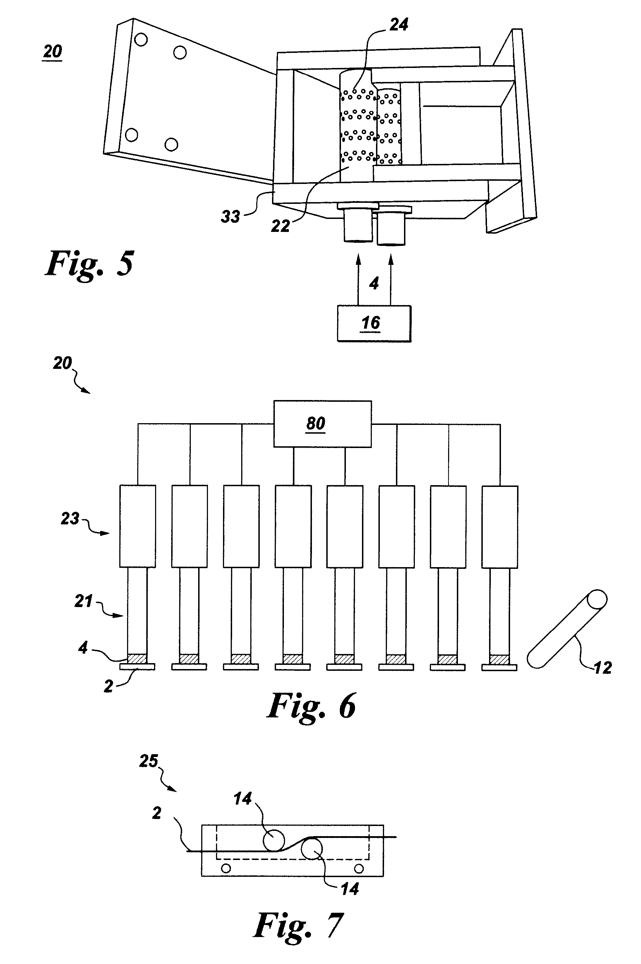

A fiber placement system 10 embodiment of the invention is described with reference to FIGS. 1-4. As shown for example in FIG. 1, an example fiber placement system 10 includes a resin impregnation assembly 20 for applying a resin (not shown in FIG. 1) to one or more fiber tows 2 and for infusing the fiber tows 2 with the resin to form one or more inline resin-infused fiber tows, which are also indicated by reference numeral 2. Although the example configuration depicted in FIG. 1 shows four fiber tows, the invention is not limited to any specific number of fiber tows, and this number will vary based on the application and specific machine design. Example configurations for the resin impregnation assembly 20 are described below with reference to FIGS. 5-7.

As used here, the term "fiber tow" refers to any member of the general class of filaments, fibers, tows comprising multiple (for example, 10,000 -50,000) fibers. Typically, the strength of the interleaved structure is reduced when the tows contain more than 50,000 fibers, while manufacturing costs increase when the tows contain fewer than 3000 fibers. In two examples, 12,000 and 24,000 fiber tows were used. Non-limiting examples of fiber types include glass fibers, high strength fibers (such as carbon fibers), harder shear resistant fibers (such as metallic or ceramic fibers), and high toughness fibers (such as S-glass, aramid fibers, and oriented polyethylene fibers). Non-limiting examples of aramid fibers include Kevlar® and Twaron®. Kevlar® is sold by E. I. du Pont de Nemours and Company, Richmond Va. Twaron® aramid fibers are sold by Tejin Twaron, the Netherlands. Non-limiting examples of oriented polyethylene fibers include Spectra® and Dyneema®. Spectra® fiber is sold by Honeywell Specialty Materials, Morris N.J. Dyneema® fiber is sold by Dutch State Mines (DSM), the Netherlands.

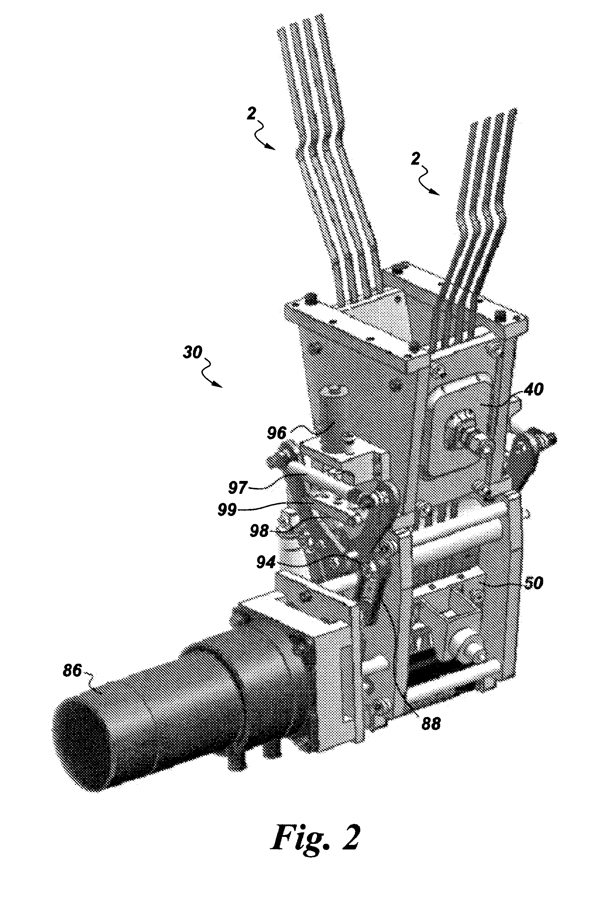

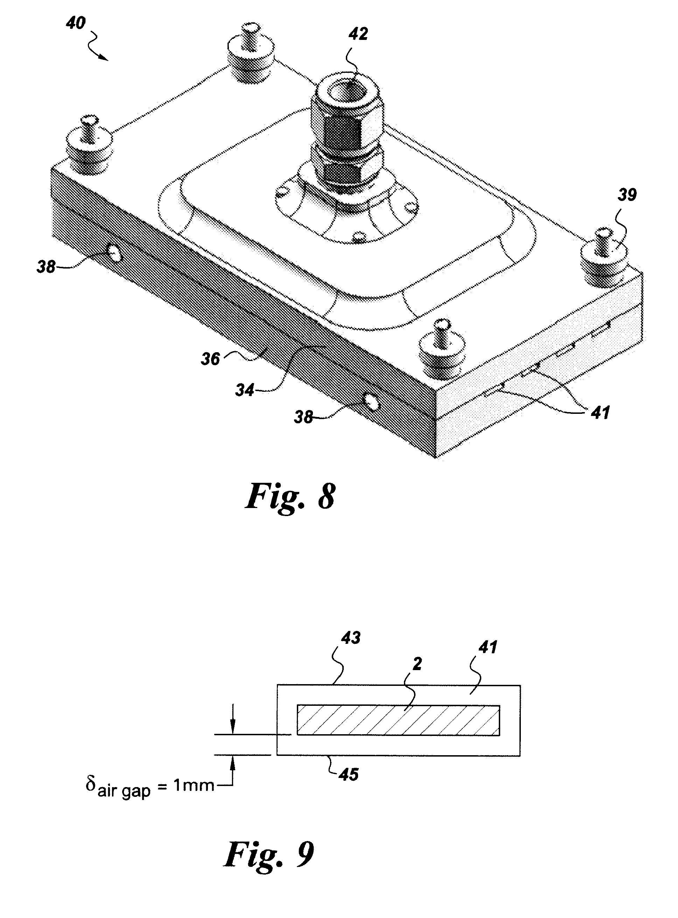

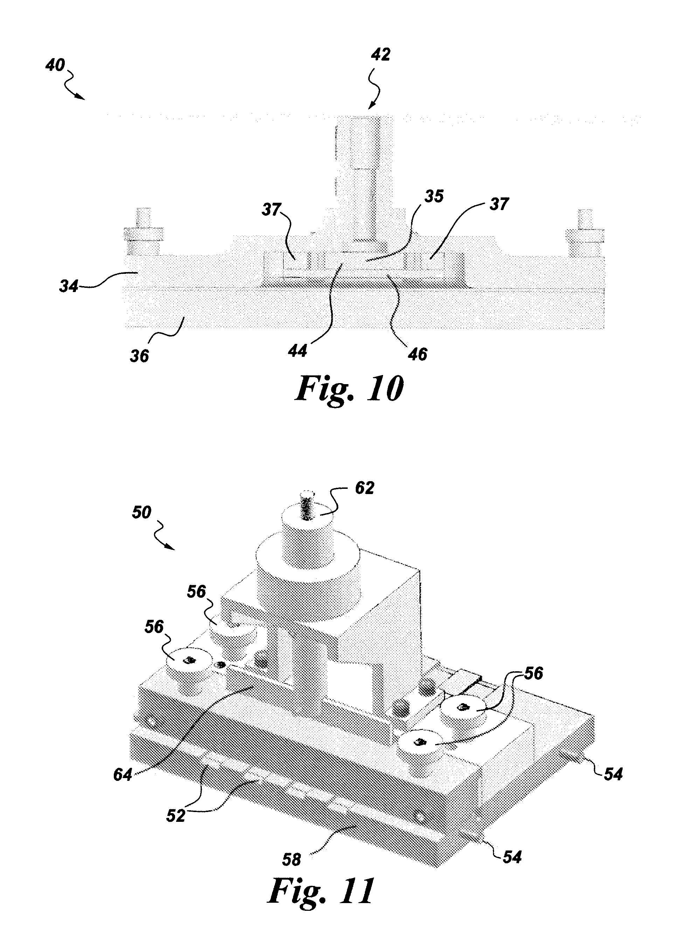

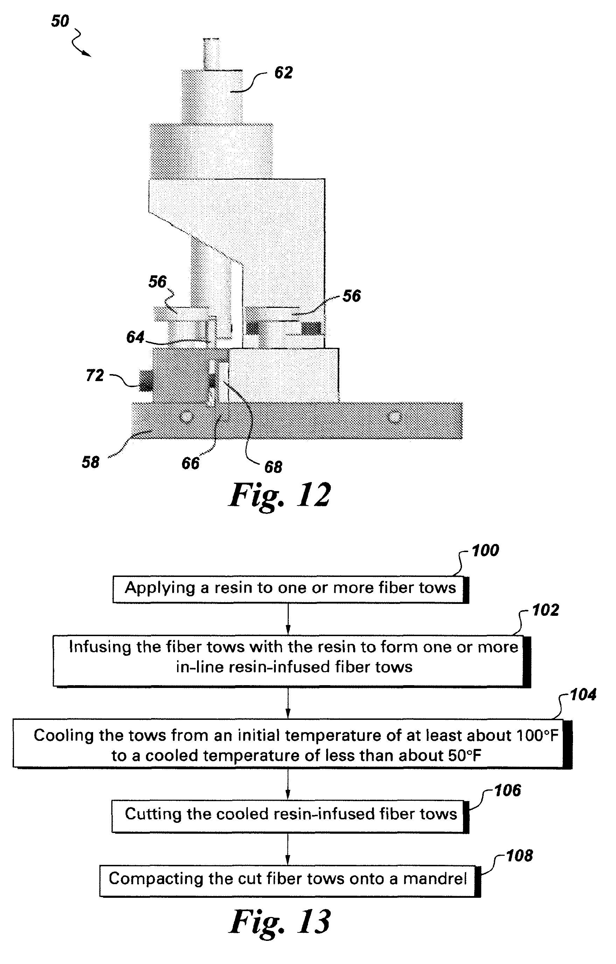

As indicated in FIG. 1, the system 10 further includes a fiber placement head 30. As shown, for example, in FIGS. 2-4, the fiber placement head 30 includes at least one cooler 40 configured to receive and cool the inline resin-infused fiber tows 2 from the resin impregnation assembly 20. Coolers 40 are described in further detail below with reference to FIGS. 8-10. Fiber placement head 30 further includes at least one cutter assembly 50 configured to receive and cut the cooled resin-infused fiber tows 2. An example cutter assembly 50 is described below with reference to FIGS. 11 and 12. As shown, for example, in FIGS. 2-4, fiber placement head 30 further includes a compaction assembly 60 configured to receive and compact the cut fiber tows onto a tool 70. The compaction assembly is described below with reference to FIGS. 1-4. For the example arrangement shown in FIG. 1, the fiber tows 2 are supplied from a creel 90. In the illustrated example, the creel 90 comprises multiple spools 92. As indicated, each of the tows 2 is initially wound on a respective one of the spools 92. One or more spool tensioners 32 may be provided to control the tension of the fiber tows on the creel 90. The spool tensioner(s) 26 may be controlled by a controller 80, as indicated in FIG. 1. The controller 80 may also be used to provide controls for resin impregnation assembly 20 and/or fiber placement head 30. In other configurations, separate controllers (not shown) may be employed.

In some embodiments, the controller 80 may comprise one or more processors. It should be noted that the present invention is not limited to any particular processor for performing the processing tasks of the invention. The term "processor," as that term is used herein, is intended to denote any machine capable of performing the calculations, or computations, necessary to perform the tasks of the invention. The term "processor" is intended to denote any machine that is capable of accepting a structured input and/or of processing the input in accordance with prescribed rules to produce an output, as will be understood by those skilled in the art.

The fiber placement head 30 is configured to move relative to a tool 70, which can rotate about an axis of rotation or be stationary. The controller 80 may be further configured to control the relative movement of the fiber placement head 30 and the tool 70. Typically, the fiber placement head 30 moves relative to the tool 70. More particularly, the fiber placement head 30 is configured to move axially, translationally and pivot. Although, in theory, the tool 70 could also be configured to move relative to the fiber placement head 30, the relative size and configurations of the tool 70 and the fiber placement head 30, make this theoretical configuration impractical. This relative movement may be accomplished using a variety of techniques, such as mounting the fiber placement head 30 in a gantry (support framework-not shown). The fiber placement head 30 may be slidably engaged with a track (not shown) and be driven by an actuator (not shown) to move up and down the track, or may be located on a multi-axis spindle head (not shown). Collectively, the track and actuator may be termed a positioner. The positioner, in turn, may be mounted on the gantry. In addition, the creel 90, resin supply 16, heater(s) (not shown), and spool tensioner(s) 32 may also be mounted on the gantry.

In one example arrangement shown in FIG. 5, the resin impregnation assembly 20 comprises one or more infusion rollers 22 configured to receive a resin 4, for example from a resin supply (or resin box) 16. Non-limiting examples of the resin 4 include thermosetting polymeric resins, such as vinyl ester resin, polyester resins, acrylic resins, epoxy resins, polyurethane resins, and mixtures thereof. As shown, for example, in FIG. 5, each of the infusion rollers 22 defines multiple holes 24 configured to infuse the fiber tows (not shown in FIG. 5) with the resin to form the inline resin infused tows. For the example arrangement shown in FIG. 5, the resin impregnation assembly 20 comprises two infusion rollers 22 configured to have four fiber tows pass therebetween. In addition, for the example configuration shown in FIG. 5, the infusion rollers 22 are encased in a box 33.

As per the invention as defined in the claims, each of the infusion rollers 22 defines a number of notches configured to receive respective ones of the fiber tows. Neighboring ones of the notches are separated by a gap. For this example arrangement, the holes 24 are arranged at the notches and have an interrupted spacing along an axial direction of the infusion roller 22.

FIG. 6 illustrates an example arrangement for the resin impregnation assembly 20 which falls outside the scope of the claims. For the configuration shown in FIG. 6, the resin impregnation assembly 20 comprises one or more nozzles 21 configured to deposit the resin on a respective one of the fiber tows. Various configurations of nozzles 21 may be employed. For the illustrated arrangement, each of the nozzles 21 is configured to deposit the resin on only one of the fiber tows 2. For the configuration shown, the nozzles 21 are configured to deposit the resin on only one side of the fiber tows 2. For other configurations, nozzles 21 could be configured to deposit resin on both sides of the fiber tows. A number of different configurations of the nozzles 21 are shown in commonly assigned, U.S. Patent Application Ser. No. 12/575,668, "Resin application and infusion system,". Although the example array in FIG. 6 comprises eight tows, the invention is not limited to a specific array size or tow count, and for certain applications it may comprise less than eight tows, and for other applications may comprise more than eight tows

For the example configuration shown in FIG. 6, the fiber placement system 10 further includes a controller 80 configured to control a flow rate of the resin through each of the nozzles 21 relative to the fiber speed of respective ones of the fiber tows. The controller 80 may be further configured to control the flow rate of the resin through each of the nozzles 21 using feedback based on measurement data of resin width and/or resin thickness for respective ones of the fiber tows 2. For this feedback controlled arrangement, one or more sensors 12 may be employed for monitoring at least one of the resin width and the resin thickness. Although only one sensor 12 is indicated in FIG. 6 for ease of illustration, multiple sensors 12 may be employed, and in one non-limiting example, one sensor 12 is provided for each of the fiber tows 2. Example sensors include optical or contact sensors.

In addition, for the example configuration shown in FIG. 6, the resin impregnation assembly 20 further comprises one or more computer controlled pumps 23. Each of the pumps is configured to supply the resin to respective ones of the nozzles 21. As indicated, each of the pumps is controlled by the controller 80. Beneficially, the arrangement shown in FIG. 6 enables real-time, inline infusion of an array of dry fiber tows, with control of the resin application (and consequently infusion) rate for each of the tows, based on part specific requirements.

According to a more particular embodiment, the resin impregnation assembly 20 further includes an infusion enhancer 25 for enhancing infusion of the resin into the fiber tows 2. One example of the infusion enhancer 25 is shown in FIG. 7. As shown in FIG. 7, rods 14 are oriented parallel to one another in a direction substantially transverse to a feed path of the fiber tows 2. Depending on the particular configuration, the fiber tows 2 may extend above, and/or, below and/or between the rods 14, such that the rods 14 press the resin at least partially into the fiber tows 2. Another non-limiting example of the infusion enhancer 25 is a pair of platens (not shown), where the fiber tows 2 extend between the platens. Examples of the infusion enhancer 25 are described in U.S. Patent Application Ser. No. 12/575,668, "Resin application and infusion system."

Aspects of the fiber placement head 30 are discussed below with reference to FIGS. 8-12. As noted above, the fiber placement head 30 includes at least one cooler 40 configured to receive and cool the inline resin-infused fiber tows 2 from the resin impregnation assembly 20. An example cooler 40 is described below with reference to FIGS. 8-10. According to a particular embodiment, each cooler 40 is configured to cool the resin-infused fiber tows from an initial temperature of at least about 37,7° Celsius ( 100 degrees Fahrenheit ) to a cooled temperature of less than about 10° Celsius ( fifty degrees Fahrenheit. )

According to a more particular embodiment, each cooler 40 is configured to cool the resin-infused fiber tows from an initial temperature of at least about 60° Celsius ( 140 degrees Fahrenheit ) to a cooled temperature of less than about 4,44° Celsius ( forty degrees Fahrenheit. ) This is in contrast with the prior art cooling, which limits the warming of pre-preg tapes, which are mounted in a cooled creel to a temperature of less than or around room temperature.

For the example cooler configuration shown in FIG. 8, each cooler 40 defines multiple cooling channels 41 configured to receive and cool individual ones of the in-line resin-infused fiber tows (not shown in FIG. 8). For the particular configuration shown in FIG. 8, the cooling channels 41 are formed in a lower plate 36. Although four channels are shown in FIG. 8, this is merely illustrative, and the cooler may have other numbers of channels. An example cooling channel 41 is schematically depicted in FIG. 9. According to a particular embodiment, each of the inline resin-infused fiber tows 2 is separated from an upper and a lower wall 43, 45 of the respective one of the cooling channels 41 by a gap δ of at least about 0.5 mm. In a more particular example, the gap δ is about 1.0 mm, and still more particularly, the gap δ is about 2.0 mm

FIG. 10 shows the cooler 40 of FIG. 8 in cross-sectional view. For the arrangement shown in FIGS. 8 and 10, each cooler 40 has an inlet 42 configured to receive a coolant. Non-limiting examples of the coolant include chilled gas, such as, but not limited to chilled air. The coolant may be supplied by a compressor/blower (not shown). Although only one inlet 42 is shown in the illustrated example, multiple inlets (not shown) may be employed. In one configuration (not illustrated), a second inlet is provided to supply coolant below the cooling channels. This latter configuration may be desirable to reduce tow vibrations and improve heat transfer.

As indicated in FIG. 10, for example, the cooler 40 further includes at least one plenum (cooling manifold) 44 in fluid connection with the inlet 42. Although only one plenum 44 is shown in the illustrated example, the upper plate 34 may also define multiple cooling manifolds (not shown). In one non-limiting example (not shown) the plenum is open to the tows. In another example configuration, a closed plenum is provided with impingement cooling.

The cooler 40 shown in FIG. 10 further includes a diverter 46 for diverting at least a portion of the coolant from an inner portion (indicated by reference numeral 35) to an outer portion 37 of the plenum 44. In the illustrated example, the diverter 46 comprises a diverter plate 46. The plate 46 may be solid. In other examples, the plate 46 may define one or more holes (not shown) to provide impingement cooling for the inline infused fiber tows. More particularly, the diverter 46 diverts at least a portion of the coolant to an exit portion of the cooling channels 41, so that the coolant is more evenly distributed across the cooling channels thereby enhancing cooling of the resin-infused fiber tows.

For the example arrangement shown in FIG. 8, holes 38 are provided for mounting the cooler (cooling assembly) 40 in the overall fiber placement head assembly 30. Fasteners 39 are provided to fasten the upper and lower plates 34, 36 together.

The cooler components may be formed of a variety of materials, including metallic as well as lower thermal conductivity materials, such as composites, polyvinyl chloride (PVC), polyethelene (PE), NORYL® or Lexan®. Noryl® and Lexan® are commercially available from Saudi Basic Industries Corporation (SABIC), Pittsfield, Massachusetts. In one non-limiting example, the upper and lower plates 34, 36 comprise metals, and thermal insulation (not shown) is provided above the upper plate and below the lower plate to limit heating of the cooler plates by ambient air and thus further enhance cooling of the tows. In another example, the upper and lower plates 34, 36 comprise one or more materials selected from the group consisting of composites, PVC, PE, NORYL® and Lexan®, and thermal insulation is not provided.

In addition to the above-discussed features, cooling may be further enhanced by the use of co-flow and/or counter-flow. In FIG. 8 coolant (cooling air) enters the system through inlet 42. This cooling air enters the cooling channel 41 through the plenum 44. If the plenum 44 is connected to the channel 41 close to the center of the channel (lengthwise), the airflow will split. Part of the air will flow in the same direction as the fiber tow 2 is going, such that cooling air and fiber tow exit on the same side. This is a co-flow setup, given that both materials/fluid are flowing in the same direction. The other portion of the cooling air will flow into the other channel direction and flow through the channel against the movement of the fiber tow 2 and exits the channel where the fiber enters it. Both materials/fluids flow in opposite directions or counter-flow. The location of the plenum along the length of the channel does not necessarily have to be centered. Depending on the optimization criteria, the plenum can be located somewhere along the length of the channel.

Cross-flow may also be used to further cool the fiber tows. For example, air can be blown across the fiber tow (cross-flow), where air enters from one side of the fiber (roughly perpendicular to the fiber tows) and exits on the opposite side. However, given the tight tolerances in the channel, co-flow and counter-flow will generally be more readily implemented than cross-flow.

In addition to the above-discussed features, cooling may be further enhanced by selectively configuring the cooler geometry, as well as by adjusting coolant conditions, such as the flow rate and temperature of the coolant. However, the specific design configurations and coolant conditions vary by application, based on the boundary conditions. For example, the geometry of the cooler determines the flow cross sectional areas, flow channel lengths, plenum location and injection type. Example boundary conditions arising from the pre-preg material, include properties such as thermal conductivity or specific heat, geometry of the material, feed rate, pre-preg material temperature at the cooler inlet and the desired temperature at the outlet.

In the design process, all potential variables including cooling air flow rate and temperature are adjusted to ensure the desired pre-preg material exit temperature. In this process, the pressure drop in the channel for the two different flow directions is taken into account to determine the apportionment of the total cooling air mass flow between co-flow and counter-flow. This apportionment is a function of the pressure drop due to the frictional pressure loss on the channel wall, the frictional pressure loss on the pre-preg surface, as well as the entry and exit pressure losses. The division of the flow between co-flow and counter-flow and the cooler geometry are used to determine the heat transfer coefficients, which are used to calculate the temperature profiles of the pre-preg material along its path in the cooler. Depending on the overall boundary conditions, the geometry, feed rate, cooling air conditions are adjusted to achieve the desired outcome, for example, to minimize the amount of coolant used, or to maximize the coolant temperature. In addition to the thermal design, the friction force on the pre-preg material from the air (coolant) flow is considered to ensure that it does not adversely affect the overall fiber-placement system.

Depending on how the coolant is blown onto the pre-preg material, displacement of the fiber tows may be taken into consideration. For example, if the coolant is injected from one side, the displacement of the fiber tows is more significant than the displacement would be if coolant is injected from both sides. In addition, vibrations from the coolant injection or flow in the channel may displace the fiber tows.

An example cutter assembly 50 is described with reference to FIGS. 11 and 12. However, the illustrated cutter assembly is merely an example, and the invention is not limited to a specific cutter assembly. For the example assembly shown in FIGS. 11 and 12, the cutter assembly 50 includes multiple feed-paths 52 for receiving the tows. Although four feed-paths are shown, other number of feed-paths may be provided. In one non-limiting example, the tows move at a rate of about one foot per second. Alignment pins 54 are provided for mounting the cutter assembly 50 in fiber placement head 30. For the illustrated arrangement, thumbscrews (fasteners) 56 are provided for fastening the upper portion of the cutter assembly to a lower plate 58. Other fastening means may be employed.

As indicated in FIGS. 11 and 12, an actuator 62 is provided to actuate the cutter (blade) 64. Non-limiting examples of actuators include solenoids and air compressors. In the illustrated example, a wear bar 66 and a support piece 68 are provided. In one non-limiting example, the wear bar 66 comprises bronze. Further, in the illustrated example, a set screw 72 is provided to maintain desired preload on the wear bar. In addition, a spring return (not shown) may be provided for the blade 64.

In operation, the actuator 62 actuates the cutter 64 to cut the fiber tows and the spring return returns the blade to an initial position. For the illustrated example, the blade cuts multiple tows (in this case, four tows) simultaneously. However, other suitable cutter assemblies may provide for individual tow cutting.

An example compaction assembly 60 is described with reference to FIGS. 1-4. However, the illustrated compaction assembly is merely an example, and the invention is not limited to a specific compaction assembly. For the example assembly shown in FIGS. 2-4, the compaction assembly 60 includes a compaction roller 74 for compacting the tows 2 on the tool (not shown in FIGS. 2-4). The compaction assembly 60 further includes a compression actuator 78 for driving the compaction roller 74.

Other aspects of the fiber placement head 30 are described with reference to FIGS. 2-4. For the illustrated arrangement, a support film (guide) 82 is provided to support the tows 2. The support film may comprises a non-stick material, such as the material marketed under the tradename Teflon® which is commercially available from E. I. du Pont de Nemours and Company, which is headquartered in Wilmington, Delaware. In the illustrated example, a guide roller 76 is provided to guide the fiber tows from the support guide 82 to the compaction roller 74.

For the illustrated configuration, the fiber placement head 30 includes two cooling modules 40 which receive and cool fiber tows 2 before the tows 2 are fed to respective ones of two cutting assemblies 50. Movement of the tows 2 is accomplished by feed rollers 84, which are driven by motor 86 via belt 88. Pinch actuator 96 drives spreader 98, which in turn moves pinch leavers 99. Pinch rollers 94 are connected to pinch leavers 99 and are thus actuated by pinch actuator 96 via spreader 98 and leavers 99. Spring 97 returns pinch rollers 94 to their initial positions. In operation, actuation of the pinch rollers 94 causes the pinch rollers to compress the respective sets of tows 2 into the respective one of the feed rollers 84.

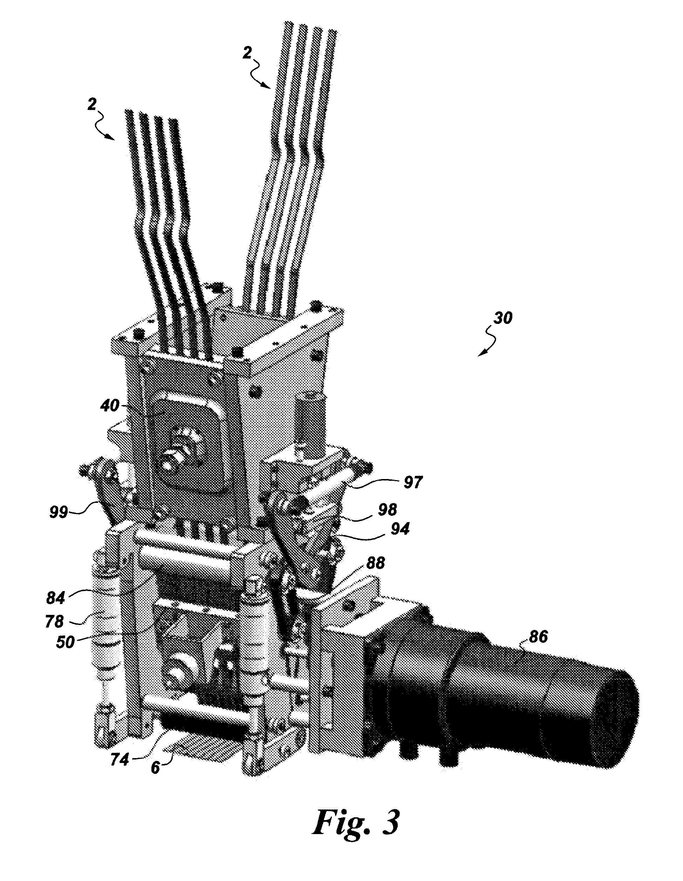

For the illustrated arrangement, each of the two sets of tows are spatially offset to form a continuous band 6 of fiber tows when combined, as indicated for example in FIG. 3.

A fiber placement method is described with reference to FIG. 13. As indicated in FIG. 13, the fiber placement method includes at step 100 applying a resin to one or more fiber tows. As discussed above with reference to Fig 5, the resin can be supplied from box 16 and be applied using the infusion rollers 22 of FIG. 5. The fiber placement method further includes at step 102 infusing the fiber tows with the resin to form one or more inline resin-infused fiber tows. The infusion can be accomplished using resin impregnation assembly 20, which may optionally include an infusion enhancer 25, as described above with reference to FIG. 7.

The fiber placement method further includes at step 104 cooling the inline resin-infused fiber tows from an initial temperature of at least about 100 degrees Fahrenheit to a cooled temperature of less than about fifty degrees Fahrenheit. According to a more particular embodiment, the inline resin-infused fiber tows are cooled from an initial temperature of at least about 140 degrees Fahrenheit to a cooled temperature of less than about forty degrees Fahrenheit. This is in contrast with prior art cooling techniques, which limit warming of pre-preg tapes from an initial temperature of less than or around room temperature. The cooling can be performed using cooler 40, which is described above with reference to FIGS. 8-10. For particular embodiments, the cooling step 104 comprises using co-flow to cool the inline resin-infused fiber tows. For other particular embodiments, the cooling step 104 comprises using counter-flow to cool the inline resin-infused fiber tows.

The fiber placement method further includes at step 106 cutting the cooled resin-infused fiber tows and, at step 108, compacting the cut fiber tows onto a tool. The cutting operation can be performed using a variety of cutting assemblies, one non-limiting example of which is the cutter assembly 50 of FIGS. 11 and 12. The compaction operation can be performed using a variety of compaction assemblies, one non-limiting example of which is compaction assembly 60.

Although only certain features of the invention have been illustrated and described herein, many modifications and changes will occur to those skilled in the art. It is, therefore, to be understood that the appended claims are intended to cover all such modifications and changes as fall within the scope of the invention.

## Claims

1. A fiber placement system (10) comprising:
a resin impregnation assembly (20) for applying a resin (4) to one or more fiber tows (2) and for infusing the fiber tows with the resin to form one or more inline resin-infused fiber tows; and
fiber placement head (30) comprising:
at least one cooler (40) configured to receive and cool the in-line resin-infused fiber tows from the resin impregnation assembly;
at least one cutter assembly (50) configured to receive and cut the cooled resin-infused fiber tows; and
a compaction assembly (60) configured to receive and compact the cut fiber tows onto a tool (70),
at least one creel (90), wherein each of the at least one creel is configured to supply respective ones of the fiber tows to a respective one of the at least one cooler (40); **characterised in that**:
the resin impregnation assembly (20) comprises one or more infusion rollers (22) configured to receive a resin (4), wherein each of said infusion rollers defines a plurality of holes (24) configured to infuse the fiber tows with the resin to form the inline resin infused tows, the plurality of holes arranged along a number of notches defined in each of the infusion rollers, the notches configured to receive respective ones of the fiber tows.

2. The fiber placement system (10) of Claim 1, wherein the resin impregnation assembly (20) further comprises an infusion enhancer (25) for enhancing infusion of the resin into the fiber tows.

3. The fiber placement system (10) of Claim 1, wherein each cooler (40) defines a plurality of cooling channels (41) configured to receive and cool individual ones of the inline resin-infused fiber tows, and wherein each of the in-line resin-infused fiber tows is separated from an upper and a lower wall (43, 45) of the respective one of the cooling channels by a gap (δ) of at least about 0.5 mm.

4. The fiber placement system (10) of Claim 1, wherein each cooler (40) defines a plurality of cooling channels (41) configured to receive and cool individual ones of the inline resin-infused fiber tows, and wherein each of the cooling channels (41) is further configured to cool a respective one of the inline resin-infused fiber tows using at least one of co-flow, counter-flow and cross-flow.

5. The fiber placement system (10) of Claim 1, wherein each cooler (40) comprises:
at least one inlet (42) configured to receive a coolant;
at least one plenum (44) in fluid connection with the inlet; and
a diverter (46) for diverting at least a portion of the coolant from an inner portion to an outer portion of the plenum ,
wherein each cooler (40) defines a plurality of cooling channels (41) configured to receive and cool individual ones of the inline resin-infused fiber tows, and wherein the diverter (46) diverts at least a portion of the coolant to an exit portion of the cooling channels.

6. A fiber placement method comprising:
applying a resin (4) to one or more fiber tows (2);
infusing the fiber tows with the resin to form one or more inline resin-infused fiber tows, through use of one or more infusion rollers (22), each roller comprising a plurality of holes (24) configured to infuse the fiber tows with the resin to form inline resin infused tows, the plurality of holes arranged along a number of notches defined in each of the infusion rollers, the notches configured to receive respective ones of the fiber tows;
cooling the inline resin-infused fiber tows from an initial temperature of at least about 100 degrees Fahrenheit to a cooled temperature of less than about fifty degrees Fahrenheit;
cutting the cooled resin-infused fiber tows; and
compacting the cut fiber tows onto a tool (70).

7. The fiber placement method of Claim 6, wherein the cooling step comprises using at least one of co-flow, counter flow and cross-flow, to cool the inline resin-infused fiber tows.

## Patentansprüche

1. Faserlegesystem (10), das Folgendes umfasst:
eine Harzimprägnierungsbaugruppe (20) zum Aufbringen eines Harzes (4) auf ein oder mehrere Faserkabel (2) und zum Durchtränken der Faserkabel mit dem Harz, um ein oder mehrere in Reihe harzdurchtränkte Faserkabel zu bilden, und
einen Faserlegekopf (30), der Folgendes umfasst:
wenigstens eine Kühleinrichtung (40), die dafür konfiguriert ist, die in Reihe harzdurchtränkten Faserkabel von der Harzimprägnierungsbaugruppe aufzunehmen und zu kühlen,
wenigstens eine Schneidbaugruppe (50), die dafür konfiguriert ist, die gekühlten harzdurchtränkten Faserkabel aufzunehmen und zu schneiden, und
eine Verdichtungsbaugruppe (60), die dafür konfiguriert ist, die geschnittenen Faserkabel zu empfangen und auf ein Werkzeug (70) zu verdichten,
wenigstens ein Spulengatter (90), wobei jedes von dem wenigstens einen Spulengatter dafür konfiguriert ist, ein jeweiliges der Faserkabel einer jeweiligen Kühleinrichtung (40) zuzuführen, **dadurch gekennzeichnet, dass**:
die Harzimprägnierungsbaugruppe (20) eine oder mehrere Durchtränkungswalzen (22) umfasst, die dafür konfiguriert sind, ein Harz (4) aufzunehmen, wobei jede der Durchtränkungswalzen mehrere Löcher (24) definiert, die dafür konfiguriert sind, die Faserkabel mit dem Harz zu durchtränken, um die in Reihe harzdurchtränkten Kabel zu bilden, wobei die mehreren Löcher entlang einer Anzahl von Kerben angeordnet sind, die in jeder der Durchtränkungswalzen definiert sind, wobei die Kerben dafür konfiguriert sind, jeweilige der Faserkabel aufzunehmen.

2. Faserlegesystem (10) nach Anspruch 1, wobei die Harzimprägnierungsbaugruppe (20) eine Durchtränkungsverbesserungseinrichtung (25) zum Verbessern der Durchtränkung des Harzes in die Faserkabel umfasst.

3. Faserlegesystem (10) nach Anspruch 1, wobei jede Kühleinrichtung (40) mehrere Kühlkanäle (41) umfasst, die dafür konfiguriert sind, einzelne von den in Reihe harzdurchtränkten Faserkabeln aufzunehmen und zu kühlen, und wobei jedes der in Reihe harzdurchtränkten Faserkabel durch einen Spalt (δ) von wenigstens etwa 0,5 mm von einer oberen und einer unteren Wand (43, 45) des jeweiligen der Kühlkanäle getrennt ist.

4. Faserlegesystem (10) nach Anspruch 1, wobei jede Kühleinrichtung (40) mehrere Kühlkanäle (41) umfasst, die dafür konfiguriert sind, einzelne von den in Reihe harzdurchtränkten Faserkabeln aufzunehmen und zu kühlen, und wobei jeder der Kühlkanäle (41) ferner dafür konfiguriert ist, ein jeweiliges der in Reihe harzdurchtränkten Faserkabel unter Verwendung von Gleichstrom, Gegenstrom und/oder Querstrom zu kühlen.

5. Faserlegesystem (10) nach Anspruch 1, wobei jede Kühleinrichtung (40) Folgendes umfasst:
wenigstens einen Einlass (42), der dafür konfiguriert ist, ein Kühlmittel aufzunehmen,
wenigstens eine Sammelkammer (44) in Fluidverbindung mit dem Einlass und
einen Umleiter (46) zum Umleiten wenigstens eines Teils des Kühlmittels von einem inneren Abschnitt zu einem äußeren Abschnitt der Sammelkammer,
wobei jede Kühleinrichtung (40) mehrere Kühlkanäle (41) umfasst, die dafür konfiguriert sind, einzelne von den in Reihe harzdurchtränkten Faserkabeln aufzunehmen und zu kühlen, und wobei der Umleiter (46) wenigstens einen Teil des Kühlmittels zu einem Austrittsabschnitt der Kühlkanäle umleitet.

6. Faserlegeverfahren, das Folgendes umfasst:
das Aufbringen eines Harzes (4) auf ein oder mehrere Faserkabel (2),
das Durchtränken der Faserkabel mit dem Harz, um durch die Verwendung von einer oder mehreren Durchtränkungswalzen (22) ein oder mehrere in Reihe harzdurchtränkte Faserkabel zu bilden, wobei jede Walze mehrere Löcher (24) umfasst, die dafür konfiguriert sind, die Faserkabel mit dem Harz zu durchtränken, um in Reihe harzdurchtränkte Kabel zu bilden, wobei die mehreren Löcher entlang einer Anzahl von Kerben angeordnet sind, die in jeder der Durchtränkungswalzen definiert sind, wobei die Kerben dafür konfiguriert sind, jeweilige der Faserkabel aufzunehmen,
das Kühlen der in Reihe harzdurchtränkten Faserkabel von einer anfänglichen Temperatur von wenigstens etwa 100 Grad Fahrenheit auf eine gekühlte Temperatur von weniger als etwa fünfzig Grad Fahrenheit,
das Schneiden der gekühlten harzdurchtränkten Faserkabel und
das Verdichten der geschnittenen Faserkabel auf ein Werkzeug (70).

7. Faserlegeverfahren nach Anspruch 6, wobei der Kühlungsschritt das Verwenden von Gleichstrom, Gegenstrom und/oder Querstrom zum Kühlen der in Reihe harzdurchtränkten Faserkabel umfasst.

## Revendications

1. Un système de placement de fibre (10) comprenant :
un ensemble d'imprégnation de résine (20) pour appliquer une résine (4) sur un ou plusieurs fils de fibre (2) et pour infuser les fils de fibre avec la résine pour former un ou plusieurs fils de fibre infusés de résine en ligne ; et
une tête de placement de fibre (30) comprenant :
au moins un refroidisseur (40) agencé pour recevoir et refroidir les fils de fibre infusés de résine en ligne de l'ensemble d'imprégnation de résine ;
au moins un ensemble de découpe (50) agencé pour recevoir et découper les fils de fibre infusés de résine refroidis ; et
un ensemble de compactage (60) agencé pour recevoir et compacter les fils de fibre découpés sur un outil (70),
au moins un cantre (90), dans lequel chacun des au moins un cantre est agencé pour fournir respectivement des fils des fils de fibre à un refroidisseur de l'au moins un refroidisseur (40) ; **caractérisé en ce que** :
l'ensemble d'imprégnation de résine (20) comprend un ou plusieurs rouleaux (22) d'infusion agencés pour recevoir une résine (4), dans lequel chacun desdits rouleaux d'infusion définit une pluralité de trous (24) agencés pour infuser les fils de fibre avec la résine pour former les fils infusés de résine en ligne, la pluralité de trous agencés le long d'encoches définies dans chacun des rouleaux d'infusion, les encoches agencées pour recevoir des fils respectifs des fils de fibre.

2. Le système de placement de fibre (10) de la revendication 1, dans lequel l'ensemble d'imprégnation de résine (20) comprend en outre un ensemble d'amélioration d'infusion (25) pour améliorer l'infusion de la résine dans les fils de fibre.

3. Le système de placement de fibre (10) de la revendication 1, dans lequel chaque refroidisseur (40) définit une pluralité de canaux de refroidissement (41) agencés pour recevoir et refroidir des fils individuels des fils de fibre infusés de résine en ligne, et dans lequel chacun des fils de fibre infusés de résine en ligne est séparé d'une paroi supérieure et inférieure (43, 45) du canal respectif des canaux de refroidissement par un espace (δ) d'au moins environ 0.5 mm.

4. Le système de placement de fibre (10) de la revendication 1, dans lequel chaque refroidisseur (40) définit une pluralité de canaux de refroidissement (41) agencés pour recevoir et refroidir des fils individuels des fils de fibre infusés de résine en ligne, et dans lequel chacun des canaux de refroidissement (41) est agencé en outre pour refroidir un fil respectif des fils de fibre infusés de résine en ligne en utilisant au moins l'un d'un co-courant, contre-courant et courant croisé.

5. Le système de placement de fibre (10) de la revendication 1, dans lequel chaque refroidisseur (40) comprend :
au moins une entrée (42) agencée pour recevoir un liquide de refroidissement ;
au moins un plénum (44) en communication fluidique avec l'entrée , et
un ensemble de détournement (46) pour détourner au moins une partie du liquide de refroidissement depuis une partie interne jusqu'à une partie externe du plénum,
dans lequel chaque refroidisseur (40) définit une pluralité de canaux de refroidissement (41) agencés pour recevoir et refroidir des fils individuels des fils de fibre infusés de résine en ligne, et dans lequel l'ensemble de détournement (46) détourne au moins une partie du liquide de refroidissement vers une partie de sortie des canaux de refroidissement.

6. Une méthode de placement de fibre comprenant de :
appliquer une résine (4) sur un ou plusieurs fils de fibre (2) ;
infuser les fils de fibre avec la résine pour former un ou plusieurs fils de fibre infusés de résine en ligne, à travers l'utilisation d'un ou plusieurs rouleaux d'infusion (22), chaque rouleau comprenant une pluralité de trous (24) agencés pour infuser les fils de fibre avec la résine pour former des fils infusés de résine en ligne, la pluralité de trous agencés le long d'un nombre d'encoches définies dans chacun des rouleaux d'infusion, les encoches agencées pour recevoir des fils respectifs des fils de fibre ;
refroidir les fils de fibre infusés de résine en ligne depuis une température initiale d'au moins environ 100 degrés Fahrenheit jusqu'à une température refroidie inférieure à environ cinquante degrés Fahrenheit ;
découper les fils de fibre infusés de résine refroidis ; et
compacter les fils de fibre découpés sur un outil (70).

7. La méthode de placement de fibre de la revendication 6, dans laquelle l'étape de refroidissement comprend d'utiliser au moins l'un d'un co-courant, contre-courant et courant croisé, pour refroidir les fils de fibre infusés de résine en ligne.
